# EUROPÄISCHE PATENTSCHRIFT

(11) **EP 2 011 924 B1**
(45) Veröffentlichungstag und Bekanntmachung des Hinweises auf die Patenterteilung: **24.08.2016**
(21) Anmeldenummer: 08011573.6
(22) Anmeldetag: 26.06.2008
(51) Int. Cl.: E02B 17/00, E02D 27/52, E02D 27/42, F03D 1/00, E02B 17/02

(54) **Offshore-Plattform**
Offshore platform
Plate-forme offshore

(30) Priorität: 05.07.2007 DE 202007009474 U
(43) Veröffentlichungstag der Anmeldung: 07.01.2009
(73) Patentinhaber: Bilfinger Marine & Offshore Systems GmbH, 22085 Hamburg (DE); Per Aarsleff A/S, 8230 Abyhoj (DK)
(72) Erfinder: Jacobsen, Jesper K., 8270 Hoejbjerg (DK); Kjaer, Alex T., 2840 Holte (DK); Kristensen, Soeren Viborg, 8000 Aarhus C (DK); Lisby, Joergen, 8530 Hjortshoej (DK); Neumeier, Michael, 22559 Hamburg (DE); Eckelmann, Stefan, 22399 Hamburg (DE); Drechsel, Ulrich, 22085 Hamburg (DE); Kahle, Hans, 21255 Tostedt (DE)
(74) Vertreter: Hofstetter, Schurack & Partner

(56) Entgegenhaltungen:
- EP-A1- 1 867 790
- WO-A1-01/23253
- DE-A1- 10 100 047
- DE-A1- 10 340 088
- DE-U1-202005 003 425
- GB-A- 1 497 080
- US-A- 3 624 702
- US-A- 3 832 857
- US-A- 4 000 624

## Beschreibung

Die Erfindung betrifft eine Offshore-Plattform, insbesondere eine Offshore-Plattform für Windkraftanlagen.

Aus der Praxis sind verschiedene Bauformen für Offshore-Plattformen bekannt. Gemeinsam ist diesen, dass sie mindestens einen Gründungspfahl für ein Bauwerk aufweisen. Der oder die Gründungspfähle werden in den Untergrund gerammt, und auf diese Pfähle wird dann das Bauwerk gegebenenfalls unter Zwischenschaltung eines Übergangsstückes (transition piece) aufgesetzt. Offshore-Plattformen mit einem Gründungspfahl werden als Monopiles bezeichnet.

Aus der DE 103 30 963 A1 ist eine Offshore-Plattform bekannt, die als Monopile mit einem Gründungspfahl ausgebildet ist, wobei sich diese Schrift mit der Ausgestaltung des Gründungspfahles befasst. Auf den Gründungspfahl, der doppelschalig aufgebaut ist und daher auch als Duopile bezeichnet wird, ist ein Übergangsstück aufgesetzt, welches mit dem Gründungspfahl vergroutet ist. Auf das Übergangsstück ist das Bauwerk aufgesetzt.

Eine weitere Offshore-Konstruktion ist aus der
GB 2 327 449 A1 bekannt, wobei in dieser Schrift die Verwendung von vorgespanntem Beton für einen Gründungspfahl in Erwägung gezogen ist.

Die US 4 000 624 A beschreibt eine aus mehreren Komponenten gebildete Offshore-Plattform. Die Komponenten umfassen eine zentrale Säule mit einer Basis, welche als Fundament der Offshore-Plattform auf dem Meeresgrund ruht. Durch Öffnungen in der Basis hindurch werden Pfähle in den Meeresgrund eingebracht. An der Säule ist als weitere Komponente eine Manschette verschiebbar angeordnet, an welcher verschwenkbare Beine befestigt sind. Die Komponenten können aus Stahl, Stahl und Beton oder aus Beton bestehen. An den der Manschette fernen Enden der Beine sind Blöcke angelenkt, welche am Meeresgrund mittels Pfählen verankert werden.

Die DE 103 40 088 A1 beschreibt ein Fundament für den Aufbau von Windkraftanlagen im Offshore-Bereich. Hierbei wird das Fundament durch eine Säule aus Stahlbeton und ein Kreuzschlitz-Betonelement gebildet. Während die Betonsäule in Meeresablagerungen gegründet ist, reicht das durch die Säule hindurchgeschobene Kreuzschlitz-Betonelement bis in den festen Mergel hinein, welcher die Meeresablagerungen unterlagert. Das so gebildete Fundament trägt ein Bauwerk in Form einer Windkraftanlage.

Die nach dem Prioritätstag der vorliegenden Anmeldung veröffentlichte EP 1 867 790 A1 beschreibt eine Offshore-Windkraftanlage mit einem Turm, welcher mit einem Übergangsstück verbunden ist. Das Übergangsstück kann aus Stahl oder Stahl und Beton bestehen und ist mit einem kappenförmigen Block aus Beton zu einer Baueinheit zusammengefügt. Diese Baueinheit wird an einem Einsatzort mit einem Metallgestell gekoppelt. Das Metallgestell umfasst Beine, welche auf dem Meeresgrund aufstehen. Zur Gründung werden Gründungspfähle durch die Beine des Metallgestells hindurch in den Meeresgrund hineingetrieben.

Die WO 01/23253 A1 beschreibt eine Offshore-Windkraftanlage, bei welcher ein Turm der Windkraftanlage mittels eines Fundaments aus Beton gegründet ist, welches auf dem Meeresboden aufliegt.

Die DE 101 00 047 A1 beschreibt ein Verfahren zur Erstellung eines Turms auf einem Gewässerboden. Hierbei werden Betonringe auf dem Gewässerboden übereinander gestapelt. Auf den so gebildeten Turm wird eine Abschlussplatte aufgesetzt. Auf die Abschlussplatte wird dann eine Ausrüstung gesetzt, etwa ein Hubschrauberlandeplatz, eine Aussichtsplattform oder ein Windgenerator.

Die GB 1 497 080 A und die US 3 832 857 A beschreiben Verfahren zum Vergrouten von Ringräumen im Bereich von Gründungen bei Offshore-Anlagen.

Die DE 20 2005 003 425 U1 befasst sich damit, wie die Gründung eines Turmbauwerks zu gestalten ist. Die Gründung des Turmbauwerks kann einen Gründungspfahl umfassen. Auf ein Kopfknotenelement der Gründung ist ein Turmschaft aufgesetzt, welcher über Spannglieder mit dem Kopfknotenelement verbunden ist. Auf den Turmschaft wird eine Turmsäule aufgesetzt und dort verschraubt. Die den Turmschaft umfassende Gründung kann aus Beton hergestellt sein. Das Turmbauwerk kann zudem eine Halterung für Rotorflügel einer Windenergieanlage umfassen.

Die US 3 624 702 A beschreibt eine Offshore-Plattform, bei welcher eine auf einer Fachwerkstruktur abgestützte Plattform auf einem Träger angeordnet ist. Auf der Plattform sind weitere Aufbauten vorhanden, etwa ein Kran und ein Bohrturm. Der Träger umfasst ein Basissegment, Zwischensegmente und ein oberes Segment. Das Basissegment ist über Pfähle im Meeresgrund gegründet. Das obere Segment weist Flügel auf, welche untere Gurte der Fachwerkstruktur abstützen, wobei die Plattform auf ein oberes Deck der Fachwerkstruktur montiert ist. Die Segmente des Trägers sind aus Beton ausgebildet und können an Land vorgefertigt sein.

Bei weiteren aus der Praxis bekannten Offshore-Plattformen sind alle tragenden Teile, also die Gründungspfähle, das Übergangsstück und das Bauwerk selbst aus Stahl hergestellt, denn Stahl eignet sich besonders für die Aufnahme hoher Lasten.

Offshore-Plattformen werden in einer rauhen Umgebung eingesetzt, in der das Seewasser diese nicht nur durch eine mechanische Einwirkung (Wellenlasten), sondern auch durch Korrosion belastet. Hinzukommt eine Gefährdung durch die Schifffahrt und durch Treibgut. Es ist daher bei aus der Praxis bekannten Offshore-Plattformen insbesondere erforderlich, einen guten Korrosionsschutz vorzusehen. Der Belastung muß auch durch Kontrollen und Wartungsmaßnahmen Rechnung getragen werden, um die Standfestigkeit der Offshore-Plattformen dauerhaft gewährleisten zu können, wobei ein besonderes Augenmerk dem Korrosionsschutz gilt, welcher durch Kollisionen und Treibgut häufig beschädigt wird. Dies gilt insbesondere für das Übergangsstück.

Der Erfindung liegt die Aufgabe zugrunde, bei Offshore-Plattformen deren Standfestigkeit bei vermindertem Wartungsaufwand zu gewährleisten.

Die Lösung dieser Aufgabe erfolgt erfindungsgemäß mit den Merkmalen der Ansprüche 1 und 12.

Das der Erfindung zugrundeliegende Konzept besteht in der Abkehr von immer aufwendigeren Korrosionsschutzmaßnahmen, Kontrollen und Wartungsarbeiten und in der Hinwendung zu einem der Offshore-Technik fremden Werkstoff, nämlich dem Beton. Während sich die gesamte Entwicklung in der Offshore-Technik wegen der stetig größerer werdenden Bauwerke immer leichteren und leistungsfähigeren Werkstoffen, insbesondere den Spezialstählen zuwendet, geht die Erfindung einen anderen Weg, indem sie neben Stahl Beton, insbesondere Stahlbeton einsetzt, der zwar erheblich schwerer ist als Stahl, dessen Vorteile aber, die ganze Einsatzdauer einer Offshore-Plattform betrachtet, seine Nachteile mehr als ausgleichen.

Beton erfordert im Gegensatz zu Stahl praktisch keine Wartung, denn der Beton ist unempfindlich gegen Seewasser und die darin enthaltenen Mineralien. Darüber hinaus sind bei Beton die Freiheiten in der Formgebung und Dimensionierung größer als bei Stahl, so dass sich auch durch die Formgebung und Dimensionierung eine den jeweiligen Umweltbedingungen, insbesondere auch den auftretenden Lasten angepaßte Konstruktion erstellen läßt.

Darüber hinaus lassen sich Betonkonstruktionen auch an praktisch beliebiger Stelle errichten, also beispielsweise in einem in der Nähe des späteren Einsatzortes gelegenen Hafen, wodurch sich die mit großen Stahlkonstruktionen verbunden Schwerlasttransporte über Land erübrigen.

Gemäß der Erfindung wird für eine Offshore-Plattform mit mindestens einem ersten Gründungspfahl, einem Übergangsstück und einer an dem Übergangsstück ausgebildeten Bauwerksanschlußstruktur Schutz beansprucht, bei der vorgesehen ist, dass eine Arbeitsplattform als Betonkonstruktion ausgeführt ist. Die Offshore-Plattform ist als Monopile für eine Windkraftanlage ausgeführt, wobei die Bauwerksanschlußstruktur zum Anschließen der Windkraftanlage ausgebildet ist.

Gemäß einer Ausgestaltung der Erfindung wird für eine Offshore-Plattform mit mindestens einem ersten Gründungspfahl, einem Übergangsstück und einer an dem Übergangsstück ausgebildeten Bauwerksanschlußstruktur Schutz beansprucht, bei der vorgesehen ist, dass das Übergangsstück als Betonkonstruktion ausgeführt ist.

Beiden Fällen liegt das oben genannte Konzept zugrunde, den Wartungsaufwand durch einen in der Offshore-Technik neuen Werkstoff zu minimieren. In beiden Fällen zeigen sich die genannten Vorteile, insbesondere da sowohl das Übergangsstück als auch die Arbeitsplattform sich im Allgemeinen in der am stärksten Wetter und Seegang ausgesetzten Wellenzone (Splash-Zone) befinden.

Da sich - wie bereits ausgeführt - Betonkonstruktionen an praktisch beliebiger Stelle errichten lassen, also beispielsweise in einem in der Nähe des späteren Einsatzortes gelegenen Hafen, können diese Konstruktionen in praktisch beliebiger Größe in einem Stück gefertigt werden, ohne auf an Land bestehende Transportbeschränkungen Rücksicht nehmen zu müssen. Die ist bei der Höhe von Übergansstücken von im Allgemeinen mehr als 10 m, häufig sogar über 20 m und bei Arbeitsplattformen mit einem Durchmesser von im Allgemeinen mehr als 6 m, häufig sogar über 10 m ein nicht hoch genug einschätzbarer Vorteil.

Die Vorteile der Erfindung zeigen sich insbesondere dann, wenn - wie gemäß einer besonders bevorzugten Ausführungsform der Erfindung vorgesehen - das Übergangsstück als armierte Betonkonstruktion mit vorgespannter Armierung ausgeführt ist. Solche Übergangsstücke können die auftretenden Lasten, insbesondere die bei Windkraftanlagen sehr hohen Biegekräfte besonders gut aufnehmen, ohne dass der Beton ermüdet, und ohne dass für die Armierung eine Korrosionsgefahr besteht. Die Vorspannung vermindert die Rißbildung im Beton und führt auch zu einem verminderten Wassereintritt sowie einer geringeren Carbonatisierung. Spannglieder der Bewehrung werden dabei vorzugsweise erst nach dem Aushärten des Betons in Hüllrohre eingeführt und mit Spannpressen gespannt und verkeilt, wobei die Hüllrohre ihrerseits zunächst zwischen einer schlaffen Bewehrung positioniert und mit dieser einbetoniert worden sind. Die Hüllrohre werden mit den Spanngliedern darin (Spannkanal) abschließend mit Zementmörtel verfüllt.

Bei einem Einsatz der erfindungsgemäßen Offshore-Plattform als Plattform für eine Windkraftanlage kommt noch als weiterer Vorteil hinzu, dass das hohe Gewicht des Betons sich günstig auf das Schwingungsverhalten der gesamten Anlage auswirkt, da der Beton, sei es als Übergangstück oder als Arbeitsplattform im Verhältnis zur gesamten Anlage in sehr geringer Höhe angeordnet ist.

Das Aufsetzen eines Bauwerkes und dessen Verankerung wird erleichtert, wenn - wie gemäß einer weiteren bevorzugten Ausführungsform der Erfindung vorgesehen, die Bauwerksanschlußstruktur eine einbetonierte Anschlußflanschstruktur oder alternativ eine einbetonierte Bolzenringstruktur aufweist. Beide bevorzugten Ausführungsformen dienen darüber hinaus der Aufgabe der Erfindung, bei einem minimierten Wartungsaufwand eine dauerhafte Standfestigkeit zu gewährleisten, denn teilweise eingebettet in den Beton tritt an den Bauwerksanschlußstrukturen - wenn überhaupt - nur noch eine verminderte Korrosion auf.

Das Errichten der Offshore-Plattform wird erleichtert, wenn - wie gemäß einer weiteren bevorzugten Ausführungsform der Erfindung vorgesehen - das Übergangsstück zum Anschluß an den Gründungspfahl mindestens eine nach Innen vorspringende betonierte Lagerfläche, insbesondere eine nach Innen vorspringende betonierte Lagerringfläche aufweist. Solche Lagerflächen lassen sich in Beton verhältnismäßig einfach herstellen, und sie erlauben es auch, die auftretenden über einen großen Bereich in das Übergangsstück einzuleiten, wodurch sie Lastsprünge und Spannungsspitzen sowie die mit diesen verbundenen Gefahren für die Standfestigkeit der Offshore-Plattform vermeiden lassen.

Das Errichten der Offshore-Plattform wird ferner erleichtert, wenn - wie gemäß einer weiteren bevorzugten Ausführungsform der Erfindung vorgesehen, das Übergangsstück zum Anschluß einer Arbeitsplattform mindestens eine nach Außen vorspringende betonierte Kragenfläche, insbesondere eine nach Außen vorspringende betonierte Kragenringfläche aufweist. Ist dann noch die Arbeitsplattform - wie vorzugsweise vorgesehen - als Betonkonstruktion ausgebildet, ist der Aufwand für die Montage am Einsatzort besonders gering.

Gemäß einer besonders bevorzugten Ausführungsform der Erfindung ist vorgesehen, dass der Gründungspfahl als Stahlkonstruktion nach Art eines Stahlrohres ausgebildet ist. Ein solcher Gründungspfahl lässt sich besonders einfach und sicher im Meeresgrund verankern.

Gemäß einer weiteren bevorzugten Ausgestaltung der Erfindung ist vorgesehen, dass in dem Gründungspfahl mindestens eine, vorzugsweise mehrere Zuführöffnungen ausgebildet sind, an denen vorzugsweise Anschlussflansche zum Anschluss von Groutmaterial-Zuführleitungen ausgebildet sind. Eine solche Ausgestaltung erleichtert die Montage auf See (Offshore-Montage).

Alle vorgenannten Vorteile sind dann besonders ausgeprägt, wenn - wie vorzugsweise vorgesehen - ein an der Bauwerksanschlußstruktur angeschlossenes Bauwerk die Windkraftanlage ist.

Die Erfindung äußert sich auch in einem neuen Verfahren zur Errichtung einer Offshore-Plattform, bei dem ein Gründungspfahl, ein Übergangsstück und eine Arbeitsplattform hergestellt werden, wobei die Herstellung des Gründungspfahls und des Übergangsstückes an Land erfolgt, wobei gemäß der Erfindung die Herstellung der Arbeitsplattform an Land als Betonkonstruktion erfolgt. Die Offshore-Plattform wird als Monopile für eine Windkraftanlage ausgeführt, wobei die Bauwerksanschlußstruktur zum Anschließen der Windkraftanlage ausgebildet wird. Durch diese Art der Fertigung einer Offshore-Plattform wird die zur Errichtung der Offshore-Plattform auf See notwendige Arbeitszeit reduziert, was nicht nur die Herstellungskosten verringert sondern auch zu einer Verminderung der Gefahren, denen die Bauwerksersteller ausgesetzt sind, führt. Gleiches gilt für ein die Erfindung ausgestaltendes Verfahren, bei dem die Herstellung des Übergangsstücks an Land als Betonkonstruktion erfolgt.

Gemäß einer besonders bevorzugten Ausführungsform des Verfahrens erfolgt die Herstellung des Gründungspfahls an Land als Stahlkonstruktion.

Gemäß einer weiteren bevorzugten Ausführungsform der Erfindung wird nach der Einbringung des Gründungspfahls am Einsatzort, also auf See, das Übergangsstück aufgesetzt, ausgerichtet und mit dem Gründungspfahl vergroutet. Durch eine solche Vergroutung, die bei einem Übergangsstück aus Beton eine besondere Festigkeit aufweist, wird mit einfachen Mitteln ein sicherer Verbund geschaffen.

Gemäß einer besonders bevorzugten Ausführungsform des Verfahrens erfolgt das Vergrouten durch eine Verfüllung eines zwischen dem Gründungspfahl und dem Übergangsstück gebildeten Ringraumes, insbesondere durch eine Druckbefüllung, bei der das Groutmaterial am unteren Ende des Ringraumes, insbesondere durch mindestens eine, vorzugsweise mehrere in dem Gründungspfahl ausgebildete Zuführöffnungen zugeführt wird und durch die Zuführung in dem Ringraum ansteigt. Eine Druckbefüllung erlaubt eine besonders günstige Anmischung des Groutmaterials auf einer bei der Errichtung der Offshore-Plattform verwendeten Arbeitsplattform, sodass das Groutmaterial optimale Eigenschaften aufweist. Durch die Zuführung von unten wird sichergestellt, dass der gesamte auszufüllende Ringraum ausgefüllt wird und nicht unbeabsichtigt Hohlräume entstehen. Das Ansteigen erlaubt eine optische Kontrolle des Verfüllvorgangs von oben, ohne das dafür besonders aufwendige Vorkehrungen zu treffen wären.

Eine zusätzliche Sicherheit dafür, dass der gesamte Ringraum ausgefüllt worden ist, kann durch eine weitere besonders bevorzugte Ausführungsform des Verfahrens erreicht werden, bei der das Vergrouten durch einen Vergleich des Volumens des zugeführten Groutmaterials mit dem theoretisch ermittelten Volumen des Ringraumes kontrolliert wird.

Weitere vorteilhafte Ausgestaltungen und Weiterbildungen der Erfindung ergeben sich aus den Unteransprüchen sowie aus der Beschreibung im Zusammenhang mit den Zeichnungen.

Dabei zeigen:
- Fig. 1: eine mit einer Windkraftanlage ausgestattete Offshore-Plattform gemäß einer bevorzugten ersten Ausführungsform der Erfindung in einer Übersichtsdarstellung,
- Fig. 2: die Offshore-Plattform in einer vergrößerten Darstellung,
- Fig. 3: die Offshore-Plattform in den Fig. 1 und 2 in einem ersten Schnitt gemäß der Linie III - III in Fig. 5,
- Fig. 4: die Offshore-Plattform in den Fig. 1 bis 3 in einem zweiten Schnitt gemäß der Linie IV - IV in Fig. 5,
- Fig. 5: die Offshore-Plattform in den Fig. 1 bis 4 in einem dritten Schnitt gemäß der Linie V - V in den Fig. 2 bis 4,
- Fig. 6: die Offshore-Plattform in den Fig. 1 bis 5 in einem vierten Schnitt gemäß der Linie VI - VI in den Fig. 3 und 4,

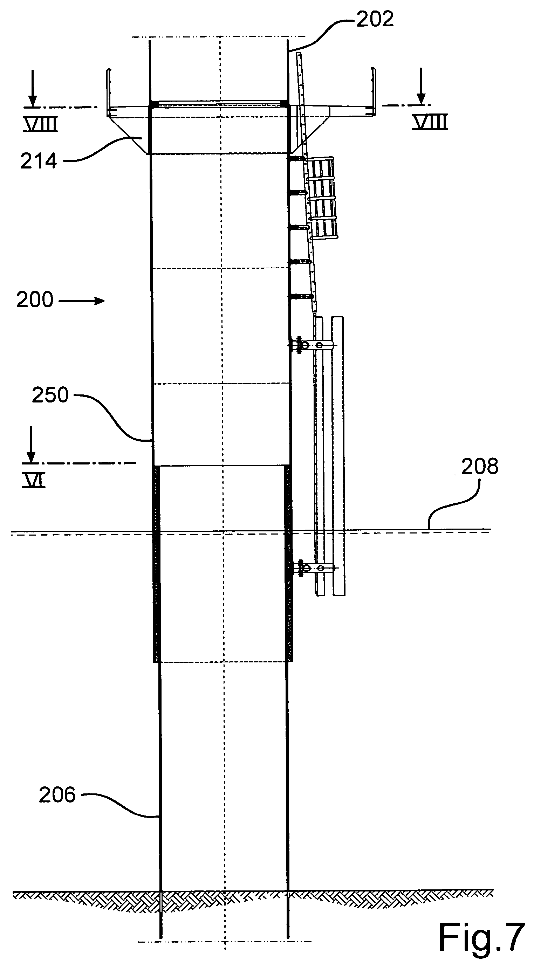

- Fig. 7: eine Offshore-Plattform gemäß einer bevorzugten zweiten Ausführungsform der Erfindung in einer vergrößerten Darstellung,

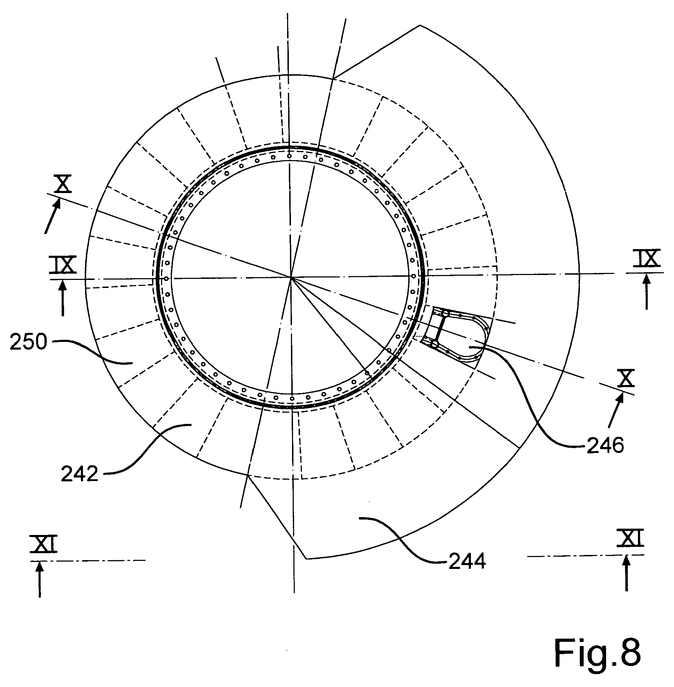

- Fig. 8: die Offshore-Plattform in Fig. 7 in einem ersten Schnitt gemäß der Linie VIII - VIII in Fig. 7,

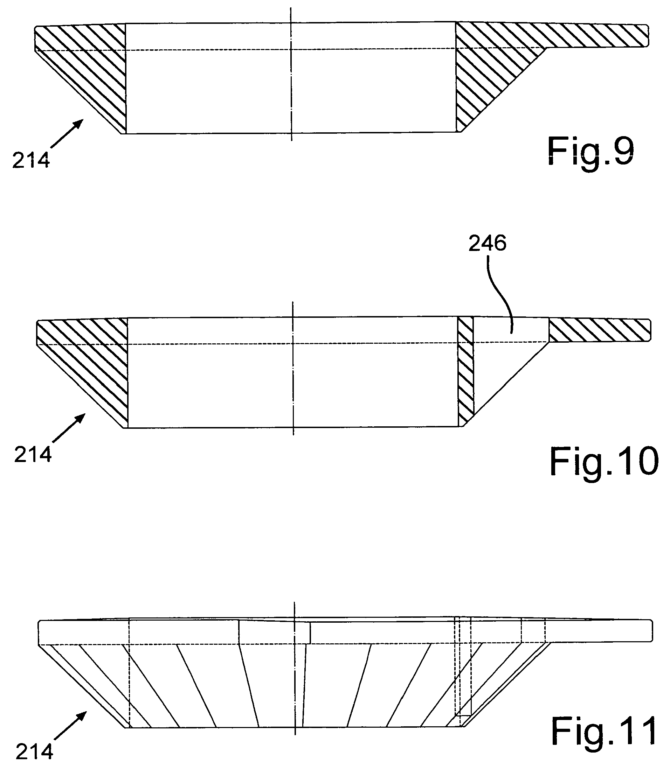

- Fig. 9: eine Arbeitsplattform der Offshore-Plattform in den Fig. 7 und 8 in einem ersten Schnitt gemäß der Linie IX - IX in Fig. 8,
- Fig. 10: die Arbeitsplattform in Fig. 9 in einem zweiten Schnitt gemäß der Linie X - X in den Fig. 8,
- Fig. 11: die Arbeitsplattform in den Fig. 9 und 10 in einem dritten Schnitt gemäß der Linie XI - XI in den Fig. 8, und
- Fig. 12: einen Ausschnitt aus Fig. 3 mit einer alternativen Abdichtung.

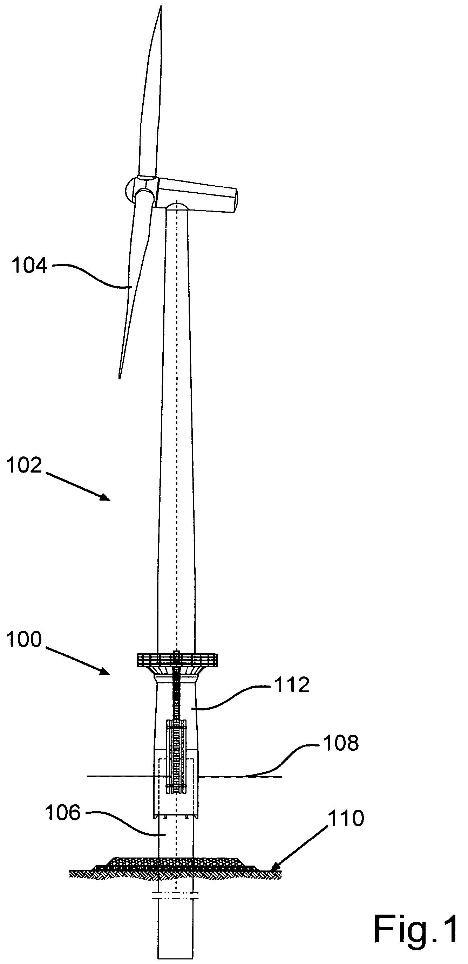

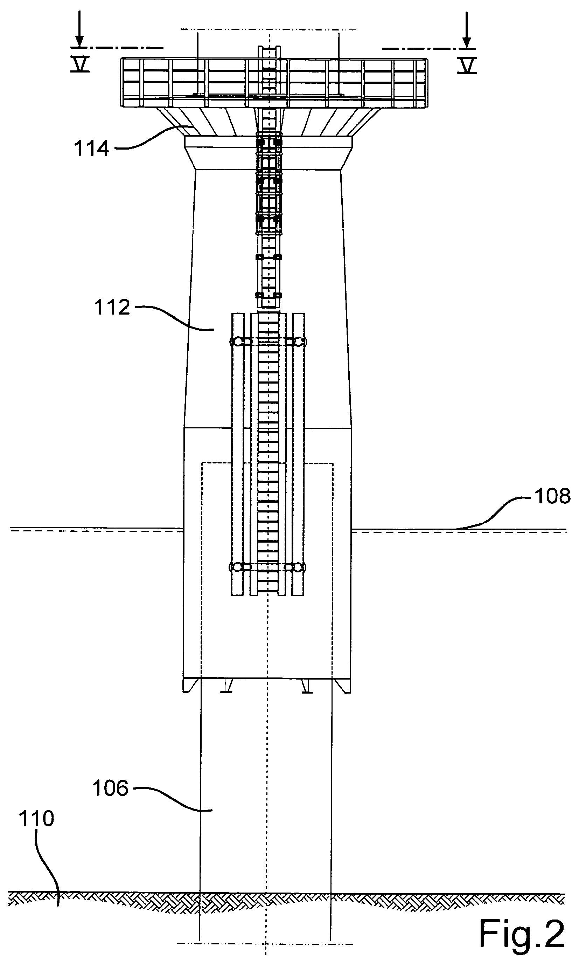

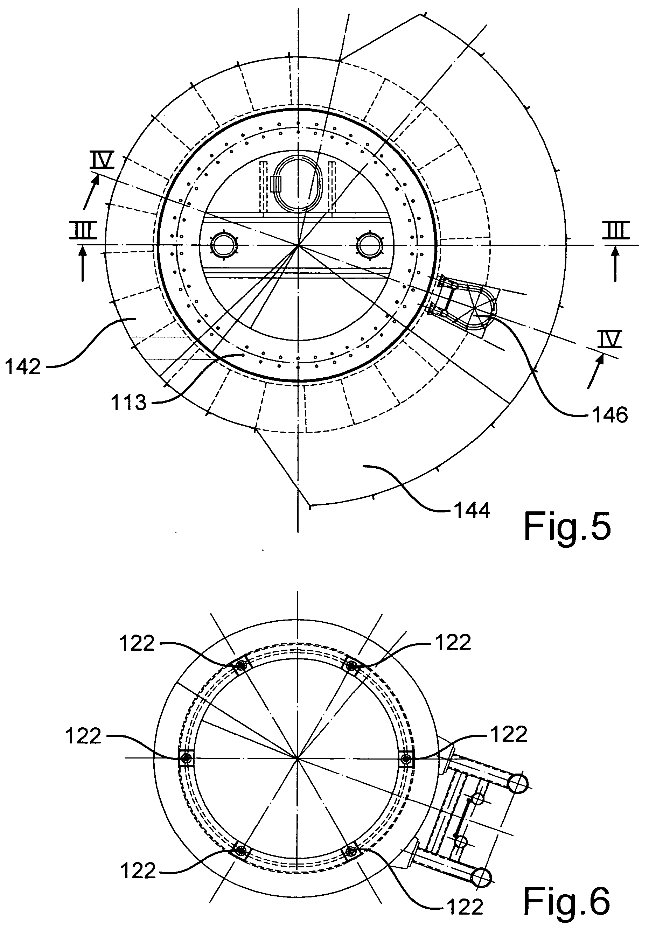

Die in den Fig. 1 bis 6 gezeigte erste bevorzugte Ausführungsform einer erfindungsgemäßen Offshore-Plattform 100 ist mit einer Windkraftanlage 102 ausgestattet, deren Rotor 104 einen Durchmesser von 93 m aufweist. Die Nabe des Rotors 104 befindet sich in einer Höhe von etwa 68 m oberhalb der mittleren Wasserlinie 108.

Die Offshore-Plattform 100 selbst ist als Monopile ausgeführt und weist einen Gründungspfahl 106 auf, der in den Meeresgrund 110 gerammt ist. Zum Anschluß der Windkraftanlage 102 an den Gründungspfahl 106 ist ein Übergangsstück 112 vorgesehen.

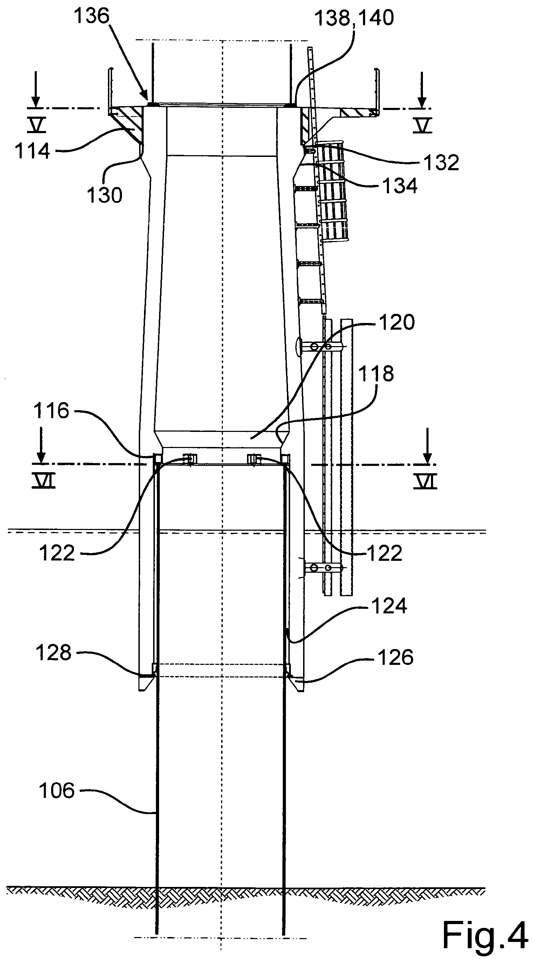

Während der Gründungspfahl 106 ein Stahlrohr ist, ist das Übergangsstück 112 eine Betonkonstruktion mit vorgespannter Bewehrung 113 (Fig. 4). Die Überdeckung der Bewehrung 113 mit Beton ist außen und innen mehr als 10 cm. Das Übergangsstück 112 ist hutartig über den Gründungspfahl 106 gestülpt, wobei das Übergangsstück 112 bei einer Höhe von etwa 18 m etwa 5 m tief in das Wasser eintaucht. Bei einer Wandstärke von 45 cm wiegt das Übergangsstück 112, das wie eine Betonröhre oder ein Betonturm erscheint, ca. 270 t. Das Übergansstück 112 hat abschnittsweise eine leicht kegelstumpfförmige Kontur, wodurch es zumindest in einem Abschnitt des Wellenangriffsbereichs verjüngt ist. Dadurch verringern sich die Wellenlasten, die die Offshore-Plattform 100 aufnehmen muss. Außerhalb des Wellenangriffsbereiches ist das Übergangsstück 112 im Durchmesser wieder erweitert, was auch den Anschluss eines Bauwerks, hier der Windkraftanlage 102 erleichtert. Am oberen Ende des Übergangsstückes 112 ist ferner eine obere, äußere Arbeitsplattform 114 angeordnet.

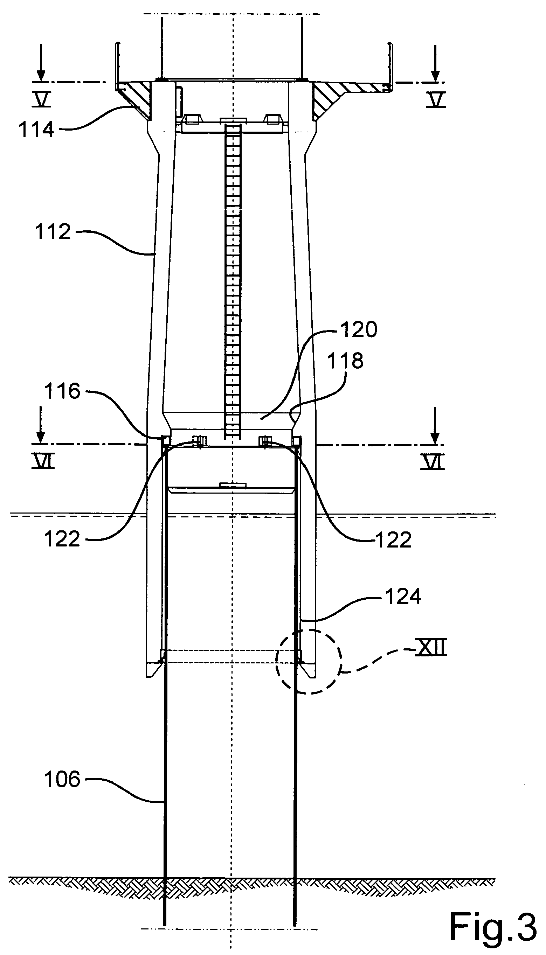

Die Fig. 3 und 4 zeigen, dass im Innern des Übergangsstückes 112 eine nach Innen vorspringende betonierte Lagerfläche 116 ausgebildet ist, die als abschnittsweise Lagerringfläche an einem Ringvorsprung 118 aus Beton ausgestaltet ist. Diese Gestaltung kann auch als Anordnung von "Überkopf-Konsolen" bezeichnet werden. Der Ringvorsprung 118 weist in Achsrichtung des Übergangsstückes 112 eine Höhe von etwa 70 cm auf, wobei davon etwa 50 cm als Übergangsbereich 120 mit einem sich zum Innendurchmesser des Übergangsstückes 112 hin angleichenden Durchmesser ausgestaltet sind, um Lastsprünge und Spannungsspitzen zu vermeiden.

Die Lagerfläche 116 dient dazu, das Übergangsstück 112 bei der Offshore-Montage auf dem Gründungspfahl 106 auszurichten, wozu sechs Hydraulikpressen 122 vorgesehen sind, die zwischen der Lagerfläche 116 und dem Gründungspfahl 106 mit zueinander gleichem Abstand angeordnet sind. Nach der Ausrichtung des Übergangsstückes 112 gegenüber dem Gründungspfahl 106 wird ein Zwischenraum 124 zwischen dem Übergangsstück 112 und dem Gründungspfahl 106 mit einer mineralischen Spezialmasse vergroutet, so dass die so gebildete Verbindung über eine große Fläche trägt. Der Zwischenraum 124, der ein Ringraum 125 ist, weist quer zur Längsstreckung eine solche Weite auf, dass sich nach dem Vergrouten eine Schichtdicke des Groutmaterials von etwa 120 mm ergibt.

An seinem unteren Ende weist das Übergangsstück 112 Führungsplatten 126 sowie eine umlaufende Lippendichtung 128 auf.

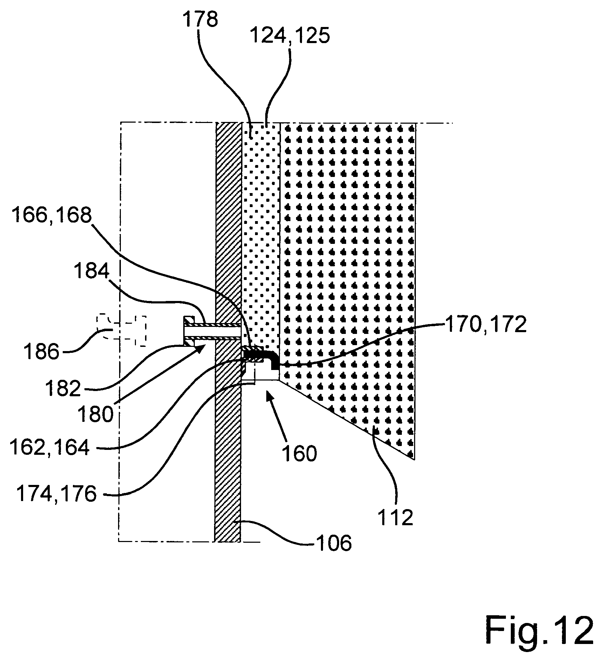

In Fig. 12 ist in einer vergrößerten Darstellung eines Abschnittes der Verbindung zwischen dem Gründungspfahl 106 und dem Übergangsstück 112 eine alternative Abdichtung 160 des Zwischenraumes 124, insbesondere des Ringraumes 125 gezeigt. Diese alternative Abdichtung 160 weist einen Fest-Flansch 162, der ein mit dem Gründungspfahl 160 verschweißtes, umlaufendes Winkelprofil 164 ist. Ferner weist die Abdichtung 160 einen Los-Flansch 166 auf. Der Los-Flansch 166 ist ein Stahlring 168, dessen Innendurchmesser größer ist als der Außendurchmesser des Gründungspfahls 106, sodass der Los-Flansch 166 über den Gründungspfahl 106 gestülpt werden kann. Der Fest-Flansch 162 und der Los-Flansch 166 können auch segmentiert ausgebildet sein, derart, dass global betrachtet ein Ring beschrieben wird, der jedoch nicht durchgehend sein muss.

Der Fest-Flansch 162 und der Los-Flansch 164 halten ein Dichtungsprofil 170, welches vorzugsweise als Gummiprofil 172 ausgebildet ist. Dazu ist eine Verschraubungsanordnung 174 vorgesehen, bei der am Umfang des Gründungspfahls 106 verteilt eine Mehrzahl Befestigungsbolzen 176 vorgesehen sind, mit denen der Los-Flansch 166 gegen den Fest-Flansch 162 gezogen werden kann, wodurch das Dichtungsprofil 172 dazwischen eingeklemmt wird. Der Fest-Flansch 162, der Los-Flansch 166 und die Verschraubungsanordnung 174 bilden also eine Haltevorrichtung für das Dichtungsprofil 170.

Im unverbauten Zustand ist das Dichtungsprofil 172 ein Rechteckring, dessen Innendurchmesser nur geringfügig größer ist als der Außendurchmesser des Gründungspfahls 106, und dessen Außendurchmesser größer ist als der Innendurchmesser des Übergangsstücks 112, sodass durch das Aufstülpen des Übergangsstücks 112 auf den Gründungspfahl 106 das Dichtungsprofil 172 bereichsweise umgebogen wird und an der Innenfläche des Übergangsstücks 112 abdichtend anliegt.

Bei der Errichtung der Offshore-Plattform 100 werden deren Elemente, insbesondere der Gründungspfahl 106, das Übergangsstück 112 und die Arbeitsplattform 114 an Land gefertigt, jeweils auf eine Schwimmplattform oder ein Montageschiff verladen und auf See montiert. Die Einbringung des Gründungspfahls 106 in den Meeresgrund (Gründung) erfolgt in bekannter Weise. Danach wird das Übergangsstück 112 aufgesetzt und mit den Hydraulikpressen 122 derart ausgerichtet, dass eine Lagerebene, zu der die Längsachse des Übergangsstücks 112 senkrecht steht, nicht mehr als 0,5° von der Horizontalen abweicht. Die Ausrichtung kann unter Zuhilfenahme von Schlauchwaagen erfolgen. Ist das Übergangsstück 112 ausgerichtet, erfolgt das Vergrouten, bei dem Groutmaterial 178 in den Zwischenraum 124/Ringraum 125 eingefüllt wird.

Um ein sicheres Vergrouten zu gewährleisten, ist in dem Gründungspfahl 106 mindestens eine Zuführöffnung 180 ausgebildet, an der ein mit einem Anschlussflansch 182 versehenes Zuführrohr 184 ausgebildet ist. Die Zuführöffnung 180 befindet sich oberhalb der Abdichtung 160, und zwar derart, dass das Zuführrohr 184 und der Anschlussflansch 182 im Innern des Gründungspfahls 106 liegen.

Der Anschlussflansch 182, der eine Schnellkupplung aufweisen kann, ist zur Kupplung mit einer flexiblen Versorgungsleitung 186 (Groutmaterialzuführleitung) vorgesehen, durch welche das Groutmaterial 178 zugeführt wird. Das Groutmaterial 178 wird unter Druck in den Ringraum 125 gefördert, sodass dieses in dem Ringraum 125 durch die Zuführung ansteigt, bis der Ringraum 125 in der vorgesehenen Höhe verfüllt ist. Danach kann die Versorgungsleitung entfernt, gereinigt und an weiteren Offshore-Plattformen verwendet werden. Um einen Austritt von Groutmaterial durch die Zuführöffnung 180 nach der Befüllung zu verhindern, kann in dem Zuführrohr 184 ein Absperrventil vorgesehen sein.

Das Groutmaterial 178 besteht im Wesentlichen aus Zement, insbesondere hoch- und frühfestem Zement, Sand und Wasser, wobei dem Groutmaterial 178 Kunststoffzusätze beigefügt sind, um das Druckverhalten zu verbessern, denn durch Belastungen an dem Gründungspfahl 106 auftretende Ovalisierungs-Tendenzen sollen durch das Groutmaterial 178 mindestens teilweise kompensiert werden.

Wenn über eine große Höhe entlang der Längserstreckung des Gründungspfahls 106 Vergroutung erfolgen soll, ist es vorteilhaft, die Vergroutung in mehreren Sektionen durchzuführen und dazu entlang der Längserstreckung des Gründungspfahls 106 - also in Höhenrichtung beabstandet - mehrere Zuführöffnungen auszubilden.

An seinem oberen Ende weist das Übergangsstück 112 eine nach außen vorspringende betonierte Kragenfläche 130 auf, welche die Arbeitsplattform 114 trägt. Die Kragenfläche 130 ist an einem nach außen vorspringenden Kragen 132 ausgebildet, der ähnlich wie der Ringvorsprung 118 sich mit einem Übergangsbereich 134, hier an den Außendurchmesser des Übergangsstückes 112 angleicht, um Lastsprünge und Spannungsspitzen zu vermeiden.

Ferner weist das Übergangsstück 112 an seiner oberen Stirnseite 136 eine Bauwerksanschlußstruktur 138 auf, wobei die Bauwerksanschlußstruktur 138 ihrerseits eine Bolzenringstruktur 140 aufweist. Die Bolzen dieser Bolzenringstruktur 140 werden vor dem Betonieren des Übergangsstückes 112 an einem Ring, der quasi wie ein Anker wirkt, ausgerichtet und mit diesem verschweißt, wonach dann diese Struktur beim Betonieren von dem Beton umschlossen wird. Nach dem Betonieren ragen die Bolzen aus der Hüllkontur des Betons des Übergangstückes nach oben vor.

Die Arbeitsplattform 114 ist wie das Übergangsstück 112 der ersten Ausführungsform als Betonkonstruktion ausgeführt, wobei die Arbeitsplattform einen ersten, inneren, um das ganze Übergangstück umlaufenden Ringsabschnitt 142 und einen sich daran nach Außen in einem Sektor von etwa 170° erstreckenden Erweiterungsbereich 144 aufweist. Der Erweiterungsbereich 144 dient einerseits als Arbeitsfläche und andererseits als "Notlandefläche", sollte es bei Arbeiten an der Windkraftanlage erforderlich sein, dass sich Techniker von oben abseilen müssen. In der Arbeitsplattform 114 ist ein Durchstieg 146 zu einem Bootsanleger vorgesehen.

Auch die Offshore-Plattform 200 der zweiten bevorzugten Ausführungsform in Fig. 4 ist mit einer Windkraftanlage 202 ausgestattet, deren Rotor einen Durchmesser von 93 m aufweist. Die Nabe des Rotors befindet sich wiederum in einer Höhe von etwa 68 m oberhalb der mittleren Wasserlinie. Wegen der Gemeinsamkeiten der ersten und zweiten Ausführungsform werden für Teile der zweiten Ausführungsform, die Teilen der ersten Ausführungsform entsprechen, Bezugszeichen verwendet, die gegenüber der ersten Ausführungsform um 100 erhöht sind. Auf die Beschreibung der ersten Ausführungsform wird ergänzend ausdrücklich Bezug genommen.

Auch die Offshore-Plattform 200 ist als Monopile ausgeführt und weist einen Gründungspfahl 206 auf, der in den Meeresgrund 210 gerammt ist. Zum Anschluß der Windkraftanlage 202 an den Gründungspfahl 206 ist ein Übergangsstück 250 vorgesehen, das anders als bei der ersten Ausführungsform und wie der Gründungspfahl 106 ein Stahlrohr ist.

Von einem Übergangsstück gemäß dem Stand der Technik unterscheidet sich dieses Übergangsstück 250 nicht nur durch seine Dimensionierung, sondern auch durch die Gestaltung seines oberen Endes, denn dieses Übergangsstück 250 ist wie das Übergangsstück 112 der ersten Ausführungsform dazu vorgesehen, eine Arbeitsplattform 214 zu tragen, die als Betonkonstruktion ausgebildet ist.

Um das Bauwerk, im vorliegenden Falle die Windkraftanlage 202 zu tragen, weist das Übergangsstück 250 eine Bauwerksanschlußstruktur 252 auf, die als nach innen umgebogener Ringflansch ausgebildet ist. Durch diesen Ringflansch und einen entsprechenden Ringflansch der Windkraftanlage werden Bolzen hindurch gesteckt und verschraubt.

Die Arbeitsplattform 214 gleicht im Wesentlichen der Arbeitsplattform 114, so dass zur Erläuterung auf die erste Ausführungsform verwiesen werden kann. Wie bei der ersten Ausführungsform weist die Arbeitsplattform 214 der zweiten Ausführungsform einen ersten, inneren, um das ganze Übergangstück umlaufenden Ringsabschnitt 242 und einen sich daran nach Außen in einem Sektor von etwa 170° erstreckenden Erweiterungsbereich 244 auf. Der Erweiterungsbereich 244 dient einerseits als Arbeitsfläche und andererseits als "Notlandefläche", sollte es bei Arbeiten an der Windkraftanlage erforderlich sein, dass sich Techniker von oben abseilen müssen. In der Arbeitsplattform 214 ist ein Durchstieg 246 zu einem Bootsanleger vorgesehen.

## Patentansprüche

1. Offshore-Plattform mit mindestens einem ersten Gründungspfahl (106; 206), einem Übergangsstück (112; 250) und einer an dem Übergangsstück (112; 250) ausgebildeten Bauwerksanschlußstruktur (138; 252),
wobei an dem Übergangsstück (112; 250) eine als Betonkonstruktion ausgebildete Arbeitsplattform (114; 214) angeordnet ist,
**dadurch gekennzeichnet,**
**dass** die Offshore-Plattform (100) als Monopile für eine Windkraftanlage (102; 202) ausgeführt ist, wobei die Bauwerksanschlußstruktur (138; 252) zum Anschließen der Windkraftanlage (102; 202) ausgebildet ist.

2. Offshore-Plattform nach Anspruch 1,
**dadurch gekennzeichnet,**
**dass** das Übergangsstück (112) als Betonkonstruktion ausgeführt ist.

3. Offshore-Plattform nach Anspruch 2,
**dadurch gekennzeichnet,**
**dass** das Übergangsstück (112) als armierte Betonkonstruktion mit vorgespannter Armierung (113) ausgeführt ist.

4. Offshore-Plattform nach Anspruch 2 oder 3,
**dadurch gekennzeichnet,**
**dass** die Bauwerksanschlußstruktur (138) eine einbetonierte Bolzenringstruktur (140) aufweist.

5. Offshore-Plattform nach Anspruch 2 oder 3,
**dadurch gekennzeichnet,**
**dass** die Bauwerksanschlußstruktur eine einbetonierte Anschlußflanschstruktur aufweist.

6. Offshore-Plattform nach einem der Ansprüche 2 bis 5,
**dadurch gekennzeichnet,**
**dass** das Übergangsstück (112) zum Anschluß an den Gründungspfahl (106) mindestens eine nach Innen vorspringende betonierte Lagerfläche (116), insbesondere eine nach Innen vorspringende betonierte Lagerringfläche aufweist.

7. Offshore-Plattform nach einem der Ansprüche 2 bis 6,
**dadurch gekennzeichnet,**
**dass** das Übergangsstück (112) zum Anschluß der Arbeitsplattform (114) mindestens eine nach Außen vorspringende betonierte Kragenfläche (130), insbesondere eine nach Außen vorspringende betonierte Kragenringfläche aufweist.

8. Offshore-Plattform nach einem der Ansprüche 1 bis 7,
**dadurch gekennzeichnet,**
**dass** der Gründungspfahl (106) als Stahlkonstruktion nach Art eines Stahlrohres ausgebildet ist.

9. Offshore-Plattform nach einem der Ansprüche 1 bis 8,
**dadurch gekennzeichnet,**
**dass** in dem Gründungspfahl (106) mindestens eine, vorzugsweise mehrere Zuführöffnungen (180) ausgebildet sind, an denen vorzugsweise Anschlussflansche (182) zum Anschluss von Groutmaterialzuführleitungen (186) ausgebildet sind.

10. Offshore-Plattform nach einem der Ansprüche 1 bis 9,
**dadurch gekennzeichnet,**
**dass** an dem Gründungspfahl (106), vorzugsweise an dessen Außenseite eine Haltevorrichtung, insbesondere ein Ringflansch zur Halterung eines Dichtungsprofils (170) ausgebildet ist.

11. Offshore-Plattform nach einem der Ansprüche 1 bis 10,
**dadurch gekennzeichnet,**
**dass** ein an der Bauwerksanschlußstruktur (138, 252) angeschlossenes Bauwerk die Windkraftanlage (102; 202) ist.

12. Verfahren zur Errichtung einer Offshore-Plattform, bei dem ein Gründungspfahl (106), ein Übergangsstück (112) und eine Arbeitsplattform (114) hergestellt werden, wobei die Herstellung des Gründungspfahles (106) und des Übergangsstückes (112) an Land erfolgen,
wobei die Herstellung der Arbeitsplattform (114) an Land als Betonkonstruktion erfolgt,
**dadurch gekennzeichnet,**
**dass** die Offshore-Plattform (100) als Monopile für eine Windkraftanlage (102; 202) ausgeführt wird, wobei an dem Übergangsstück (112) eine Bauwerksanschlußstruktur (138; 252) zum Anschließen der Windkraftanlage (102; 202) ausgebildet wird.

13. Verfahren nach Anspruch 12,
**dadurch gekennzeichnet,**
**dass** die Herstellung des Übergangsstücks (112) an Land als Betonkonstruktion erfolgt.

14. Verfahren nach Anspruch 12 oder 13,
**dadurch gekennzeichnet,**
**dass** die Herstellung des Gründungspfahls (106) an Land als Stahlkonstruktion erfolgt.

15. Verfahren nach einem der Ansprüche 12 bis 14,
**dadurch gekennzeichnet,**
**dass** nach der Einbringung des Gründungspfahls (106) am Einsatzort das Übergangsstück (112) aufgesetzt, ausgerichtet und mit dem Gründungspfahl (106) vergroutet wird.

16. Verfahren nach Anspruch 15,
**dadurch gekennzeichnet,**
**dass** das Vergrouten durch eine Verfüllung eines zwischen dem Gründungspfahl (106) und dem Übergangsstück (112) gebildeten Ringraumes (125) erfolgt.

17. Verfahren nach Anspruch 16,
**dadurch gekennzeichnet,**
**dass** das Vergrouten als eine Druckbefüllung des zwischen dem Gründungspfahl (106) und dem Übergangsstück (112) gebildeten Ringraumes (125) erfolgt, bei der das Groutmaterial (178) am unteren Ende des Ringraumes (125), insbesondere durch mindestens eine, vorzugsweise mehrere in dem Gründungspfahl (106) ausgebildete Zuführöffnungen (180) zugeführt wird und durch die Zuführung in dem Ringraum (125) ansteigt.

18. Verfahren nach Anspruch 16 oder 17,
**dadurch gekennzeichnet,**
**dass** das Vergrouten durch einen Vergleich des Volumens des zugeführten Groutmaterials (178) mit dem theoretisch ermittelten Volumen des Ringraumes (125) kontrolliert wird.

19. Verfahren nach einem der Ansprüche 12 bis 18,
**dadurch gekennzeichnet,**
**dass** Elemente einer Offshore-Plattform (100) nach einem der Ansprüche 1 bis 11 verwendet werden.

## Claims

1. Offshore platform with at least one first foundation pile (106; 206), a transition piece (112; 250) and a building connecting structure (138; 252) formed at the transition piece (112; 250),
wherein a working platform (114; 214) formed as a concrete construction is disposed at the transition piece (112; 250),
**characterized in that**
the offshore platform (100) is designed as a monopile for a wind power plant (102; 202), wherein the building connecting structure (138; 252) is formed for connecting the wind power plant (102; 202).

2. Offshore platform according to claim 1,
**characterized in that**
the transition piece (112) is designed as a concrete construction.

3. Offshore platform according to claim 2,
**characterized in that**
the transition piece (112) is designed as a reinforced concrete construction with pre-tensioned reinforcement (113).

4. Offshore platform according to claim 2 or 3,
**characterized in that**
the building connecting structure (138) has a bolt ring structure (140) embedded in concrete.

5. Offshore platform according to claim 2 or 3,
**characterized in that**
the building connecting structure has a connecting flange structure embedded in concrete.

6. Offshore platform according to any one of claims 2 to 5,
**characterized in that**
the transition piece (112) has at least one inwards projecting concreted support surface (116), in particular an inwards projecting concreted support ring surface, for connecting to the foundation pile (106).

7. Offshore platform according to any one of claims 2 to 6,
**characterized in that**
the transition piece (112) has at least one outwards projecting concreted collar surface (130), in particular an outwards projecting concreted collar ring surface, for connecting the working platform (114).

8. Offshore platform according to any one of claims 1 to 7,
**characterized in that**
the foundation pile (106) is formed as a steel construction in the manner of a steel pipe.

9. Offshore platform according to any one of claims 1 to 8,
**characterized in that**
at least one, preferably multiple supply openings (180) are formed in the foundation pile (106), at which connecting flanges (182) for connecting grout material supply lines (186) are preferably formed.

10. Offshore platform according to any one of claims 1 to 9,
**characterized in that**
a retaining device, in particular an annular flange for retaining a sealing profile (170), is formed at the foundation pile (106), preferably at the outer side thereof.

11. Offshore platform according to any one of claims 1 to 10,
**characterized in that**
a building connected to the building connecting structure (138, 252) is the wind power plant (102; 202).

12. Method for establishing an offshore platform, in which a foundation pile (106), a transition piece (112) and a working platform (114) are produced, wherein the production of the foundation pile (106) and the transition piece (112) is effected onshore,
wherein the production of the working platform (114) is effected onshore as a concrete construction,
**characterized in that**
the offshore platform (100) is designed as a monopile for a wind power plant (102; 202), wherein a building connecting structure (138; 252) for connecting the wind power plant (102; 202) is formed at the transition piece (112).

13. Method according to claim 12,
**characterized in that**
the onshore production of the transition piece (112) is effected as a concrete construction.

14. Method according to claim 12 or 13,
**characterized in that**
the onshore production of the foundation pile (106) is effected as a steel construction.

15. Method according to any one of claims 12 to 14,
**characterized in that**
after inserting the foundation pile (106) at the site of operation, the transition piece (112) is fitted, aligned and grouted to the foundation pile (106).

16. Method according to claim 15,
**characterized in that**
the grouting is effected by filling an annular space (125) formed between the foundation pile (106) and the transition piece (112).

17. Method according to claim 16,
**characterized in that**
the grouting is effected as a pressure filling of the annular space (125) formed between the foundation pile (106) and the transition piece (112), in which the grout material (178) is supplied at the lower end of the annular space (125), in particular through at least one, preferably multiple supply openings (180) formed in the foundation pile (106), and rises in the annular space (125) by the supply.

18. Method according to claim 16 or 17,
**characterized in that**
the grouting is controlled by a comparison of the volume of the supplied grout material (178) to the theoretically determined volume of the annular space (125).

19. Method according to any one of claims 12 to 18,
**characterized in that**
elements of an offshore platform (100) according to any one of claims 1 to 11 are used.

## Revendications

1. Plate-forme en mer avec au moins un premier pieu de fondation (106 ; 206), une pièce de transition (112 ; 250) et une structure de raccordement au bâtiment (138 ; 252), constituée sur la pièce de transition (112 ; 250), une plate-forme de travail (114 ; 214), constituée en tant que construction en béton, étant agencée sur la pièce de transition (112 ; 250),
**caractérisée en ce**
**que** la plate-forme en mer (100) est exécutée en tant que monopieu pour une centrale éolienne (102 ; 202), la structure de raccordement au bâtiment (138 ; 252) étant constituée pour raccorder la centrale éolienne (102 ; 202).

2. Plate-forme en mer selon la revendication 1,
**caractérisée en ce**
**que** la pièce de transition (112) est exécutée en tant que construction en béton.

3. Plate-forme en mer selon la revendication 2,
**caractérisée en ce**
**que** la pièce de transition (112) est exécutée en tant que construction en béton armé avec armature précontrainte (113).

4. Plate-forme en mer selon la revendication 2 ou 3,
**caractérisée en ce**
**que** la structure de raccordement au bâtiment (138) présente une structure annulaire de boulon (140) bétonnée.

5. Plate-forme en mer selon la revendication 2 ou 3,
**caractérisé en ce**
**que** la structure de raccordement au bâtiment présente une structure de bride de raccordement bétonnée.

6. Plate-forme en mer selon l'une des revendications 2 à 5,
**caractérisée en ce**
**que** la pièce de transition (112), destinée au raccordement au pieu de fondation (106), présente au moins une surface d'appui bétonnée (116), en saillie vers l'intérieur, en particulier une surface annulaire d'appui bétonnée, en saillie vers l'intérieur.

7. Plate-forme en mer selon l'une des revendications 2 à 6,
**caractérisée en ce**
**que** la pièce de transition (112), destinée au raccordement de la plate-forme de travail (114), présente au moins une surface en forme de col bétonnée (130), en saillie vers l'extérieur, en particulier une surface annulaire en forme de col bétonnée, en saillie vers l'extérieur.

8. Plate-forme en mer selon l'une des revendications 1 à 7,
**caractérisée en ce**
**que** le pieu de fondation (106) est constitué en tant que construction en acier, de type tuyau en acier.

9. Plate-forme en mer selon l'une des revendications 1 à 8,
**caractérisée en ce**
**qu'**au moins une ouverture d'alimentation, de préférence plusieurs ouvertures d'alimentation (180), sont constituées dans le pieu de fondation (106), sur lesquelles sont constituées de préférence des brides de raccordement (182), destinées au raccordement de conduites d'alimentation en matériau de coulis (186).

10. Plate-forme en mer selon l'une des revendications 1 à 9,
**caractérisée en ce**
**qu'**un dispositif de retenue, en particulier une bride annulaire, destinée à la fixation d'un profilé d'étanchéité (170), est constitué sur le pieu de fondation (106), de préférence sur sa face extérieure.

11. Plate-forme en mer selon l'une des revendications 1 à 10,
**caractérisée en ce**
**qu'**un bâtiment, raccordé à la structure de raccordement au bâtiment (138, 252), est la centrale éolienne (102 ; 202).

12. Procédé de construction d'une plate-forme en mer, pour lequel un pieu de fondation (106), une pièce de transition (112) et une plate-forme de travail (114) sont fabriqués, la fabrication du pieu de fondation (106) et de la pièce de transition (112) se faisant à terre, la fabrication de la plate-forme de travail (114) se faisant à terre en tant que construction en béton,
**caractérisé en ce**
**que** la plate-forme en mer (100) est exécutée en tant que monopieu pour une centrale éolienne (102 ; 202), une structure de raccordement au bâtiment (138 ; 252), destinée au raccordement de la centrale éolienne (102 ; 202), étant constituée sur la pièce de transition (112).

13. Procédé selon la revendication 12,
**caractérisé en ce**
**que** la fabrication de la pièce de transition (112) se fait à terre en tant que construction en béton.

14. Procédé selon la revendication 12 ou 13,
**caractérisé en ce**
**que** la fabrication du pieu de fondation (106) se fait à terre en tant que construction en acier.

15. Procédé selon l'une des revendications 12 à 14,
**caractérisé en ce**
**que** la pièce de transition (112) est placée, orientée et jointoyée avec le pieu de fondation (106) après la mise en place du pieu de fondation (106) sur le site d'utilisation.

16. Procédé selon la revendication 15,
**caractérisé en ce**
**que** le jointoiement est opéré par le biais d'un remplissage d'un espace annulaire (125), formé entre le pieu de fondation (106) et la pièce de transition (112).

17. Procédé selon la revendication 16,
**caractérisé en ce**
**que** le jointoiement est opéré en tant que remplissage sous pression de l'espace annulaire (125), formé entre le pieu de fondation (106) et la pièce de transition (112), pour lequel le matériau de coulis (178) est amené à l'extrémité inférieure de l'espace annulaire (125), en particulier par le biais d'au moins une, de préférence plusieurs ouvertures d'alimentation (180), constituées dans le pieu de fondation (106) et monte dans l'espace annulaire (125) par le biais de l'alimentation.

18. Procédé selon la revendication 16 ou 17,
**caractérisé en ce**
**que** le jointoiement est contrôlé par le biais d'une comparaison du volume du matériau de coulis (178) amené avec le volume, déterminé théoriquement, de l'espace annulaire (125).

19. Procédé selon l'une des revendications 12 à 18,
**caractérisé en ce**
**que** des éléments d'une plate-forme en mer (100) sont utilisés selon l'une des revendications 1 à 11.
